(19) Europäisches Patentamt

European Patent Office

Office européen des brevets

(11) **EP 4 596 206 A1**

(12) # EUROPEAN PATENT APPLICATION
published in accordance with Art. 153(4) EPC

(43) Date of publication:
06.08.2025 Bulletin 2025/32

(21) Application number: 23872645.9

(22) Date of filing: 29.09.2023

(51) International Patent Classification (IPC):
*B29C 44/00* (2006.01)    *B29C 45/00* (2006.01)
*B29C 45/56* (2006.01)    *B60J 5/10* (2006.01)

(52) Cooperative Patent Classification (CPC):
**B29C 44/00; B29C 45/00; B29C 45/56; B60J 5/10**

(86) International application number:
**PCT/JP2023/035807**

(87) International publication number:
**WO 2024/071426 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.09.2022  JP 2022157105

(71) Applicant: Resonac Corporation
Tokyo 105-7325 (JP)

(72) Inventors:
• **NAKAMURA, Shigeya**
**Tokyo 105-8518 (JP)**
• **SUZUKI, Shigeo**
**Tokyo 105-8518 (JP)**

(74) Representative: **Hoffmann Eitle
Patent- und Rechtsanwälte PartmbB
Arabellastraße 30
81925 München (DE)**

(54) **FOAM MOLDED PRODUCT, VEHICLE MEMBER, AND VEHICLE BACKDOOR**

(57)    A foam molded product is obtained by combining a plurality of foam molded parts that each have a foaming site in which a first skin layer, a foam layer, and a second skin layer are laminated in this order.

EP 4 596 206 A1

**Description**

Technical Field

The present disclosure relates to a foam molded product, a vehicle member and a vehicle backdoor.

Background Art

Since resin structures are lighter than metal, they are widely used for vehicle structural components, vehicle mounted articles, housings of electronic devices, and the like. Among resin structures, in particular, a resin molded article is lightweight, and when the resin molded article is used for a component of a vehicle such as an automobile, improvement in vehicle fuel efficiency is expected.

Thinning of the resin molded article is effective for further reducing the weight of the resin molded article. On the other hand, excessive thinning may cause a decrease in rigidity of the resin molded article. In addition, shapes such as ribs or bosses for securing rigidity may impair the surface appearance of the resin molded article.

As a method for reducing the weight of a resin molded article while maintaining rigidity, for example, a foaming molding method as described in Patent Literature 1. In Patent Literature 1, a resin molded article is obtained by injecting a molten resin into a cavity of a molding die formed by a movable die and a fixed die, and then performing a foaming treatment in a state where the movable die is moved to become slightly open (core back). Hereinafter, the resin molded article obtained by performing the foaming treatment may be referred to as a foam molded product.

In a case in which the molten resin is injected into the cavity, a portion in contact with a molding die is cooled and solidified to form a film-like skin layer. In this state, when the movable mold is core-backed with respect to the fixed die to expand the volume in the cavity, the molten resin covered with the skin layer is foamed to form a foam layer, and a foam molded product is manufactured.

According to the foam molding method, it is possible to thicken the foam molded product while keeping the weight constant by expanding the volume in the cavity, so that it is possible to reduce the weight and improve the rigidity of the foam molded product.

Patent Literature 1: Japanese Patent Application Laid-Open (JP-A) No. 2005-238726

SUMMARY OF INVENTION

Technical Problem

In a case in which the thickness of the foam molded product before foaming (cavity before core back) is the same at all portions, the thickness of the foam molded product changes according to the angle (demolding angle) formed by the opening/closing direction (core back direction) of the molding die and the surface of the foam molded product. Therefore, if the cross-sectional shape of the foam molded product becomes complicated, a portion where the foam molded product cannot be sufficiently thickened may occur depending on the demolding angle, and the strength of the portion may be insufficient. As a response to market demand, cross-sectional shapes of foam molded products have increased in complexity in order to improve design.

Specific examples of the foam molded product having a complicated cross-sectional shape include outer panels and inner panels constituting a vehicle backdoor, spoilers, arch moldings, and side panels. Since dies having various demolding angles are used for forming these foam molded products, a portion having insufficient strength tends to easily occur.

The present disclosure has been made in view of the above conventional circumstances, and an object of the disclosure is to provide a foam molded product capable of achieving both weight reduction and rigidity improvement, and a vehicle member and a vehicle backdoor using the foam molded product.

Solution to Problem

Specific means for achieving the above-mentioned problems are as follows.

<1> A foam molded product obtained by combining a plurality of foam molded parts that each have a foaming site in which a first skin layer, a foam layer, and a second skin layer are laminated in this order.

<2> A vehicle member comprising the foam molded product according to <1>.

<3> A vehicle backdoor, comprising:

an outer panel; and

an inner panel provided at a vehicle inner side of the outer panel, wherein at least one of the outer panel or the inner panel includes the foam molded product according to <1>.

<4> The vehicle backdoor according to <3>, wherein:

the outer panel is the foam molded product obtained by combining a first foam molded part and a second foam molded part, and
the first foam molded part and the second foam molded part are disposed in a vertical direction.

<5> The vehicle backdoor according to <3>, wherein:

the inner panel has a window opening,
the outer panel is the foam molded product obtained by combining a first foam molded part positioned at an upper portion of the window opening and a second foam molded part positioned at a lower portion of the window opening, and
the vehicle backdoor further comprises a door glass covering the window opening.

<6> The vehicle backdoor according to <5>, wherein, when a cross section in a thickness direction of the foaming site of the first foam molded part and a cross section in a thickness direction of the foaming site of the second foam molded part are observed, an angle $\varphi$ formed by a direction orthogonal to the thickness direction of the foaming site of the first form molded part and a direction orthogonal to the thickness direction of the foaming site of the second form molded part shows a relationship of 60° to 90°.

Advantageous Effects of Invention

According to the disclosure, it is possible to provide a foam molded product that can achieve both weight reduction and improved rigidity, as well as a vehicle member and a vehicle backdoor that use this foam molded product.

BRIEF DESCRIPTION OF DRAWINGS

Fig. 1 is a schematic cross-sectional view of a molding device 10 used in a foam molding method.
Fig. 2 is a view illustrating a state in which a resin material R is injected and filled into a cavity 14 in the molding device 10.
Fig. 3 is a view illustrating a state in which a movable die 16 is core-backed in the opening direction with respect to a fixed die 12 in the molding device 10.
Fig. 4 is a rear view illustrating a vehicle backdoor of the disclosure.
Fig. 5 is an exploded perspective view of the vehicle backdoor of Fig. 4.
Fig. 6 is an end view taken along line A-A in Fig. 5.

DESCRIPTION OF EMBODIMENTS

The embodiments of the present disclosure are described below in detail. It is noted here, however, that the disclosure is not restricted to the below-described embodiments. In the below-described embodiments, the constituents thereof (including element steps and the like) are not indispensable unless otherwise specified. The same applies to the numerical values and ranges thereof, without restricting the disclosure.
In the disclosure, those numerical ranges that are expressed with "to" each denote a range that includes the numerical values stated before and after "to" as the minimum value and the maximum value, respectively.
In a set of numerical ranges that are stated stepwisely in the disclosure, the upper limit value or the lower limit value of a numerical range may be replaced with the upper limit value or the lower limit value of other numerical range.
In the disclosure, the term "layer" or "film" includes, when observing a region where a layer or film is present, a case in which the layer or the film is formed only on a part of the region in addition to a case in which the layer or the film is formed on the entirety of the region.
In the disclosure, the term "laminate" refers to stacking layers, two or more layers may be combined, and two or more layers may be removable.

<Foam Molded Product and Method of Manufacturing the Same>

A foam molded product of the disclosure is obtained by combining a plurality of foam molded parts that each have a foaming site in which a first skin layer, a foam layer, and a second skin layer are laminated in this order.

In the disclosure, one component obtained by one molding by the foam molding method is referred to as a foam molded part.

According to the disclosure, it is possible to obtain a foam molded product capable of achieving both weight reduction and improvement in rigidity.

The foam molded product of the disclosure is particularly effective in achieving both weight reduction and improvement in rigidity even in a foam molded product having a complicated cross-sectional shape.

Hereinafter, an outline of a manufacturing method of a foam molded product by a foam molding method will be described with reference to the drawings.

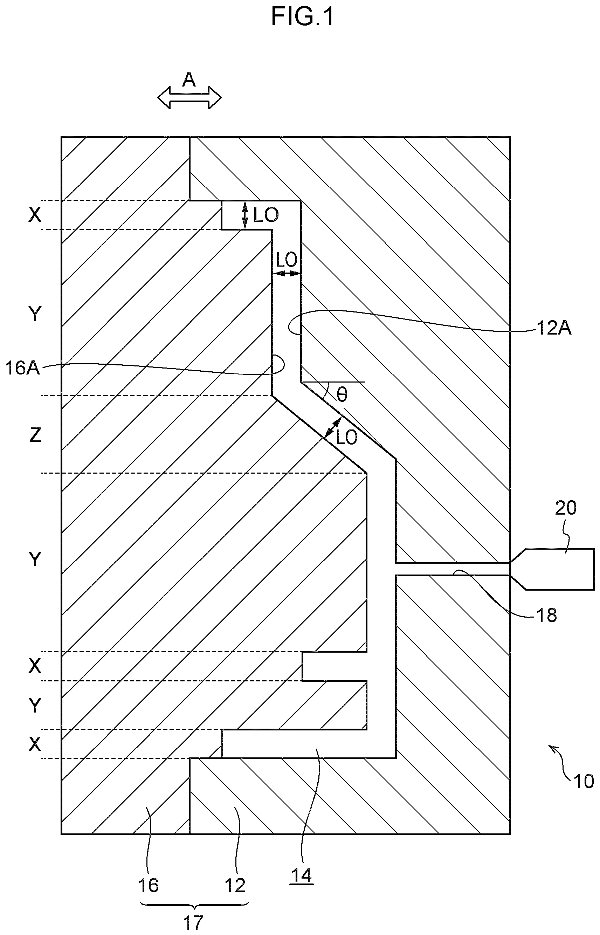

Fig. 1 is a schematic cross-sectional view of a foam molding device used in a foam molding method. Note that the sizes of the members in the drawings are conceptual, and the relative relationship between the sizes of the members is not limited thereto. In addition, members or sites having similar functions are denoted by the same reference numerals throughout the drawings, and the description thereof may be omitted.

As illustrated in Fig. 1, a molding device 10 includes a fixed die 12, and a movable die 16 that is movable in an opening/closing direction A indicated by an arrow in Fig. 1 with respect to the fixed die 12 and forms a cavity 14 as a gap with the fixed die 12. Hereinafter, the fixed die 12 and the movable die 16 may be collectively referred to as a "die 17".

The cavity 14 is a gap between a cavity surface 12A and a core surface 16A in a state where the fixed die 12 and the movable die 16 are closed. In Fig. 1, the thickness of the cavity 14 is set to the same L0 at all sites.

The cavity 14 corresponds to the shape of the foam molded product before foaming. That is, a demolding angle $\theta$ formed by the opening/closing direction A and the cavity surface 12A or the core surface 16A illustrated in Fig. 1 coincides with the demolding angle $\theta$ formed by the opening/closing direction A and the surface of the foam molded product before foaming.

In the cavity 14, the demolding angle $\theta$ formed by the opening/closing direction A and the cavity surface 12A or the core surface 16A changes according to the shape of the cavity 14.

In a region X in Fig. 1, the demolding angle $\theta$ formed by the opening/closing direction A and the cavity surface 12A or the core surface 16A is approximately 0°. In a region Y in Fig. 1, the demolding angle $\theta$ formed by the opening/closing direction A and the cavity surface 12A or the core surface 16A is approximately 90°. In a region Z in Fig. 1, the demolding angle $\theta$ formed by the opening/closing direction A and the cavity surface 12A or the core surface 16A is an angle exceeding 0° and less than 90°.

The molding device 10 further includes a gate 18 penetrating the fixed die 12 to the cavity 14, and an injection machine 20 injecting and filling a molten resin material R into the cavity 14 through the gate 18. The injection machine 20 includes a hopper (supply unit) (not illustrated) and a cylinder (not illustrated). In the injection machine 20, a mixture containing a resin, a foaming agent, an additive, and the like is supplied from a hopper (supply unit) to a cylinder, stirred by a screw or the like in the cylinder to be prepared as the resin material R, and the resin material R is injected and filled into the cavity 14 through the gate 18 at a predetermined pressure. Note that the injection machine 20 is not limited to the above configuration as long as the molten resin material R can be injected and filled into the cavity 14 through the gate 18.

The foam molded product can be manufactured, for example, by injecting the resin material R containing a foaming agent into the cavity 14 of the die 17, filling the cavity 14 with the resin material, and then moving the movable die 16 from the fixed die 12 constituting the die 17 in the opening direction of the movable die 16 in the opening/closing direction A to expand the volume in the cavity 14.

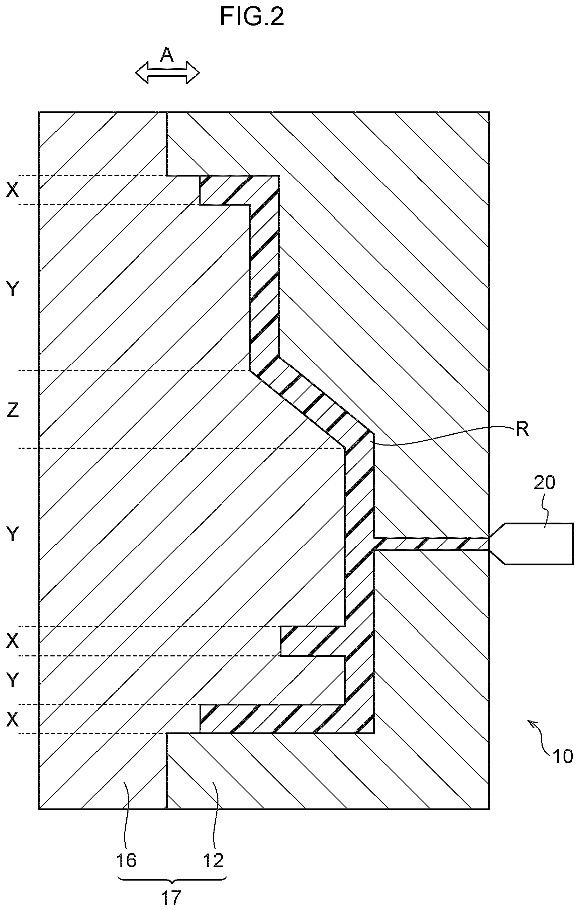

As illustrated in Fig. 2, the resin material R containing a foaming agent is injected and filled into the cavity 14 from the injection machine 20 through the gate 18. In a case in which the resin material R is made of a thermoplastic resin, the resin material R is heated to be fluidized and supplied into the cavity 14.

The cylinder temperature of the injection machine 20 is preferably 250°C or lower. By setting the cylinder temperature of the injection machine 20 to 250°C or lower, it is possible to curb the foamed gas escaping from the hopper outlet side, and it is easy to obtain effects such as improvement and stabilization of foamability at the time of molding. The cylinder temperature of the injection machine 20 may be 150°C or higher.

The resin material used in the present disclosure is not particularly limited. For example, resin materials that are used in injection foam molding generally contain a resin and a foaming agent. Examples of the resin that is used in the resin material R include at least one type of resin selected from the group consisting of polyethylene resins, polypropylene resins (PP), composite polypropylene resins (PPC), polystyrene resins, polyethylene terephthalate resins, polyvinyl alcohol resins, vinyl chloride resins, ionomer resins, polyamide resins, acrylonitrile butadiene styrene copolymer resins (ABS), and polycarbonate resins. Among these, at least one type of resin selected from the group consisting of polypropylene resins (PP), composite polypropylene resins (PPC), and acrylonitrile butadiene styrene copolymer resins (ABS) is preferable.

The resin material may contain a fiber component as needed. The fiber component may include inorganic fibers such as carbon fibers, glass fibers, metal fibers, and ceramic fibers, as well as organic fibers such as aramid fibers and cellulose fibers.

Further, the foaming agent may include organic foaming agents such as azodicarbonamide and the like, and inorganic foaming agents such as sodium hydrogen carbonate (other names: sodium bicarbonate, bicarbonate of soda). Currently, in the foam molding of automotive interior parts, inorganic sodium hydrogen carbonate is mainly used as a foaming agent, but organic foaming agents are also used.

Examples of organic foaming agents are azodicarbonamide (ADCA), N,N-dinitroso pentamethylene tetramine (DPT), 4,4-oxybis benzenesulfonyl hydrazide (OBSH), hydrazodicarbonamide (HDCA) and the like. Azodicarbonamide (ADCA) is preferable.

In addition, the die 17 is usually at a lower temperature than that of the supplied resin material R. Therefore, when the resin material R is filled into the cavity 14, solidification, leading to the formation of a skin layer, of the resin material R begins at the portion in contact with the die.

Before the resin material R is injected into the cavity 14, nitrogen gas is filled into the cavity 14 in advance. In this case, the nitrogen gas may be heated. By heating the nitrogen gas for filling, rapid temperature decrease in the cavity 14 (die 17) is curbed, and the foamability of the resin material R tends to be stabilized. In addition, by heating the nitrogen gas to be filled, the dependence of the foaming power of the resin material R on the outside air temperature is curbed without being affected by the outside air temperature, and the foaming property of the resin material R tends to be stabilized.

The temperature of the nitrogen gas filled into the cavity 14 is not particularly limited as long as the temperature can curb a rapid temperature decrease in the cavity 14 (die 17), and may be 30°C to 50°C from the viewpoint of molding stability.

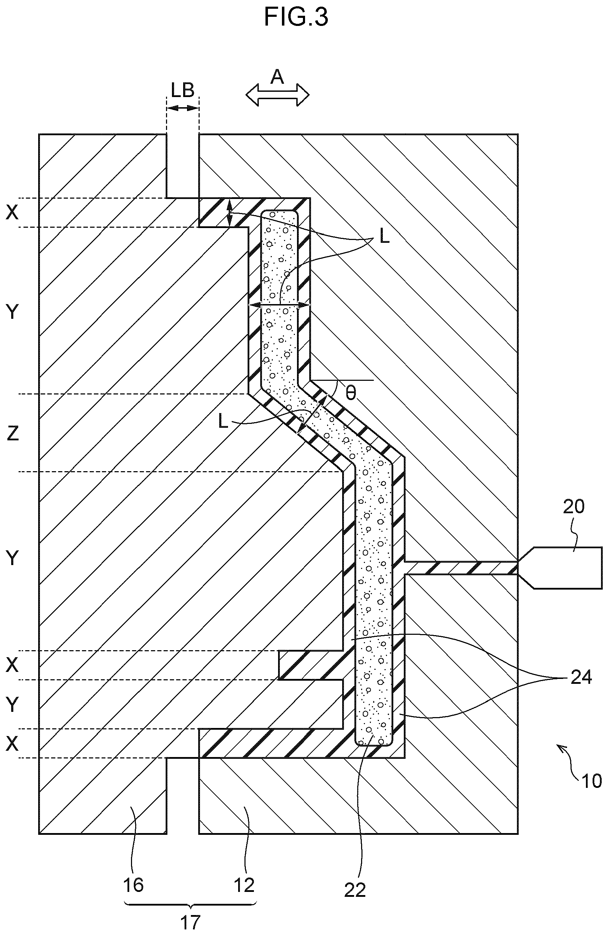

Next, as illustrated in Fig. 3, the movable die 16 is opened by a predetermined amount (core back) in the opening direction with respect to the fixed die 12, and the unsolidified resin material R is foamed to form the foam layer 22, thereby obtaining a foam molded product. As illustrated in Fig. 3, a skin layer 24 (first skin layer and second skin layer) is formed in contact with the cavity surface 12A and the core surface 16A to surround the foam layer 22.

Here, a thickness L of the foam molded product is represented by the following Formula A using the thickness L0 of the foam molded product before foaming, a core back amount LB, and a demolding angle (that is, the demolding angle formed by the opening/closing direction A and the cavity surface 12A or the core surface 16A) θ formed by the opening/closing direction A and the surface of the foam molded product before foaming.

$$L = L0 + LB \cdot \sin\theta \cdots \text{ Formula A}$$

$L = L0 + LB \cdot \sin\theta \cdots$

In a case in which the thickness of the foam molded product before foaming is uniform (that is, in a case in which L0 in Formula A is uniform), the thickness L is a thickness obtained by adding the core back amount LB to the thickness L0 in a region where the demolding angle θ is close to 90°. On the other hand, as the demolding angle θ approaches 0°, the thickness corresponding to the demolding angle θ in the thickness L decreases.

For example, the thickness L of the foam molded product in Fig. 3 is L0 in the region X, L0+LB in the region Y, and L0+LB·sinθ in the region Z.

The values of the thickness L of the foam molded product when the demolding angle θ is changed are shown in Table 1, taking the case where L0 is 1.50 mm and LB is 1.60 mm as an example.

[Table 1]

| L0 (mm) 1.50 | $\theta$ | LB | $\sin\theta$ | LB $\times$ $\sin\theta$ | L |
|---|---|---|---|---|---|
| | ° | mm | - | mm | mm |
| | 90 | 1.60 | 1.00 | 1.60 | 3.10 |
| | 75 | 1.60 | 0.97 | 1.55 | 3.05 |
| | 60 | 1.60 | 0.87 | 1.39 | 2.89 |
| | 45 | 1.60 | 0.71 | 1.13 | 2.63 |
| | 30 | 1.60 | 0.50 | 0.80 | 2.30 |
| | 15 | 1.60 | 0.26 | 0.41 | 1.91 |
| | 0 | 1.60 | 0.00 | 0.00 | 1.50 |

The bending rigidity of the object is proportional to the elastic modulus of the object and the cube of the plate thickness. In addition, when the elastic modulus of the foam molded product before foaming is compared with the elastic modulus of the foam molded product after core back and foaming, the elastic modulus of the foam molded product after foaming is lower than the elastic modulus of the foam molded product before foaming.

Therefore, it is desirable to set the amount of core back and the thickness of the foam molded product before foaming to obtain predetermined bending rigidity in consideration of an increase in strength due to the plate thickness increased by the core back and a decrease in elastic modulus of the molded article decreased by foaming.

However, in the foam molded product, when the demolding angle $\theta$ is small, a region where no foam layer is generated (for example, the region X in Fig. 3) may be generated after the core back. In particular, the foam layer is hardly formed in a region where the demolding angle $\theta$ is less than 30°. In the foam molded product, in a case in which the area of the region where the foam layer is generated after the core back (for example, a region Y and a region Z in Fig. 3) is not relatively large with respect to the area of the region where the foam layer is not generated after the core back, it may be impossible to enjoy the effects of weight reduction and rigidity improvement by the foam molding method. In this draft, the area of the region where the foam layer is generated after the core back and the area of the region where the foam layer is not generated after the core back refer to the area of each region when the foam molded part is observed from the thickness direction.

In the foam molded product of the disclosure, a plurality of foam molded parts each having a foaming site in which a first skin layer, a foam layer and a second skin layer are laminated in this order are combined. With such a configuration of the foam molded product, it is easy to select the optimum demolding angle $\theta$ and obtain the foam molded part when molding individual foam molded parts by the foam molding method. In addition, in each of the foam molded parts, a difference is easily generated between the area of the region where the foam layer is generated after the core back and the area of the region where the foam layer is not generated after the core back. Therefore, each of the foam molded parts can enjoy the effects of weight reduction and rigidity improvement by the foam molding method. As a result, it is possible to reduce the weight and improve the rigidity of the foam molded product.

The foam molded product of the disclosure is a combination of a plurality of foam molded parts, and may be a combination of two foam molded parts or a combination of three or more foam molded parts.

The method of manufacturing an individual foam molded part is the same as the method of manufacturing an foam molded product described above, and specific examples of the resin material used for manufacturing the foam molded part are also as described above.

<Vehicle Member and Vehicle Backdoor>

The foam molded product of the disclosure is useful as, for example, a vehicle member used for a vehicle such as an automobile and a railway. That is, the vehicle member of the disclosure may include the foam molded product of the disclosure. The foam molded product of the disclosure can be particularly suitably used as at least one of an outer panel or an inner panel in a vehicle backdoor having an outer panel and an inner panel provided on the vehicle inner side of the outer panel. When it is attempted to obtain a vehicle member such as outer panels and inner panels constituting a vehicle backdoor, spoilers, arch moldings, and side panels by foam molding, a portion where a sufficient thickness cannot be obtained may occur due to a variety of demolding angles, and rigidity of the portion may be insufficient. When the foam molded product of the disclosure is applied to a vehicle member, occurrence of a portion having insufficient rigidity tends to be curbed.

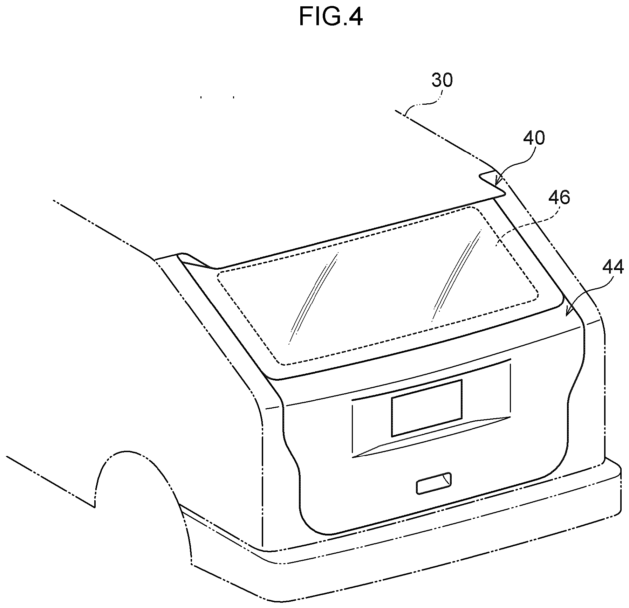

Fig. 4 illustrates a backdoor 40 in a state where a backdoor opening (not illustrated) of a vehicle body 30 indicated by a two-dot chain line is closed. The backdoor 40 is attached to the vehicle body 30 and has a function of opening and closing a backdoor opening.

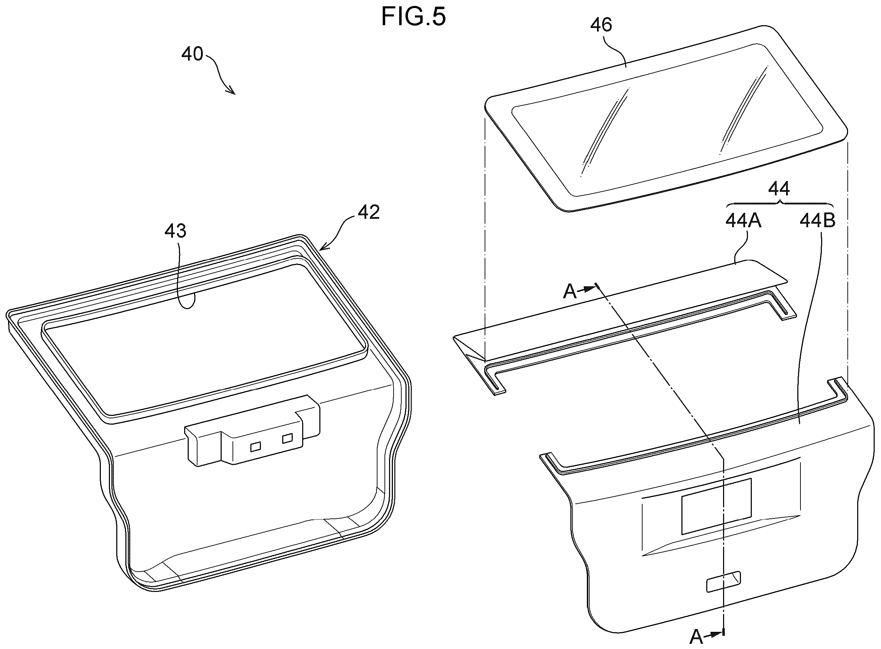

The backdoor 40 includes an inner panel 42 (see Fig. 5), an outer panel 44 (see Fig. 5), and a reinforcing member (not illustrated).

As illustrated in Fig. 5, the inner panel 42 is a resin panel member constituting the vehicle inner portion of the backdoor 40. The inner panel 42 has a window opening 43.

As illustrated in Fig. 5, the outer panel 44 is a combination of an upper outer panel 44A, which is a first foam molded part positioned above the window opening 43, and a lower outer panel 44B, which is a second foam molded part positioned below the window opening 43. As illustrated in Fig. 5, the first foam molded part and the second foam molded part are disposed in the vertical direction. The upper outer panel 44A has a rear spoiler structure. The outer panel 44 is attached to the inner panel 42. As an example, the outer panel 44 is attached to the inner panel 42 using an adhesive, but the disclosure is not limited thereto.

In addition, a rear window glass 46 as a door glass covering the window opening 43 is attached to the backdoor 40.

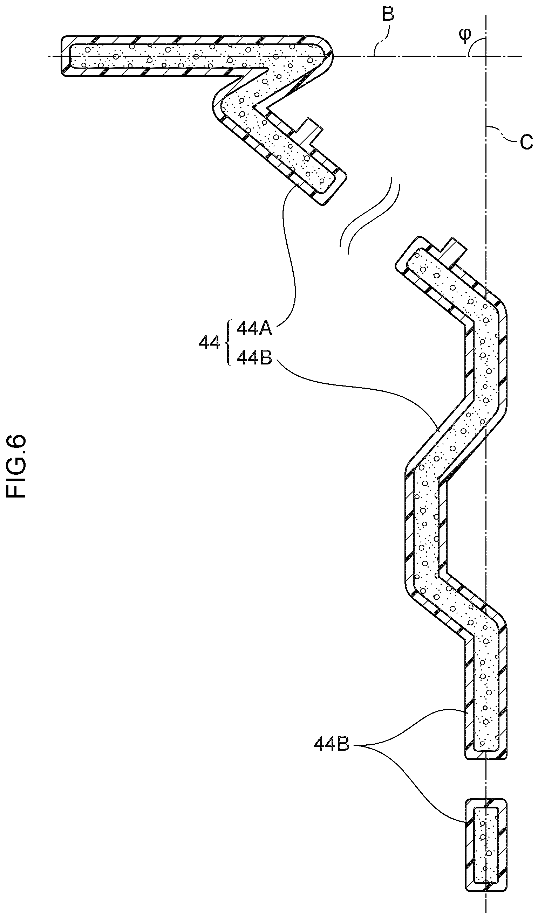

Fig. 6 is an A-A line end view of the outer panel 44 (the upper outer panel 44A and the lower outer panel 44B). As illustrated in Fig. 6, when a cross section (end surface) in the thickness direction of the foaming site of the upper outer panel 44A, which is the first foam molded part constituting the outer panel 44, and a cross section (end surface) in the thickness direction of the foaming site of the lower outer panel 44B, which is the second foam molded part constituting the outer panel 44, are observed, an angle φ formed by a direction B orthogonal to the thickness direction of the foaming site of the upper outer panel 44A and a direction C orthogonal to the thickness direction of the foaming site of the lower outer panel 44B is about 90°. Note that the direction B and the direction C can be directions orthogonal to the thickness direction at arbitrary foaming sites of the upper outer panel 44A and the lower outer panel 44B, respectively. In particular, in a case in which the upper outer panel 44A has the rear spoiler structure as illustrated in Figs. 4 to 6, the direction B can be a direction orthogonal to the thickness direction of the top surface portion of the rear spoiler structure of the upper outer panel 44A as illustrated in Fig. 6. Further, as illustrated in Fig. 6, the direction C can be a direction orthogonal to the thickness direction of the flat portion of the lower outer panel 44B at or near the place where the license plate is attached. When the direction B and the direction C are defined, ribs and bosses are excluded.

When the outer panel 44 having the angle φ in the range of 60° to 90° is formed of a single foam molded product, a region where no foam layer is formed after the core back increases, and it may be impossible to achieve both weight reduction and rigidity improvement. According to the disclosure, since the upper outer panel 44A and the lower outer panel 44B are combined to constitute the outer panel 44, even in a case in which the angle φ exhibits a relationship of 60° to 90° as the entire outer panel 44, it is possible to reduce a region where the foam layer is not generated in the upper outer panel 44A and the lower outer panel 44B, and it is possible to achieve both weight reduction and rigidity improvement of the outer panel 44.

The disclosure of Japanese Patent Application No. 2022-157105 filed on September 29, 2022, is hereby incorporated by reference in its entirety.

All the documents, patent applications and technical standards that are described in the present specification are hereby incorporated by reference to the same extent as if each individual document, patent application or technical standard is concretely and individually described to be incorporated by reference.

[Description of Symbols]

10: molding device
12: fixed die
14: cavity
16: movable die
17: die
22: foam layer
24: skin layer
30: vehicle body
40: backdoor
42: inner panel
43: window opening
44: outer panel

**Claims**

1. A foam molded product obtained by combining a plurality of foam molded parts that each have a foaming site in which a first skin layer, a foam layer, and a second skin layer are laminated in this order.

2. A vehicle member comprising the foam molded product according to claim 1.

3. A vehicle backdoor, comprising:

an outer panel; and
an inner panel provided at a vehicle inner side of the outer panel, wherein at least one of the outer panel or the inner panel includes the foam molded product according to claim 1.

4. The vehicle backdoor according to claim 3, wherein:

the outer panel is the foam molded product obtained by combining a first foam molded part and a second foam molded part, and
the first foam molded part and the second foam molded part are disposed in a vertical direction.

5. The vehicle backdoor according to claim 3, wherein:

the inner panel has a window opening,
the outer panel is the foam molded product obtained by combining a first foam molded part positioned at an upper portion of the window opening and a second foam molded part positioned at a lower portion of the window opening, and
the vehicle backdoor further comprises a door glass covering the window opening.

6. The vehicle backdoor according to claim 5, wherein, when a cross section in a thickness direction of the foaming site of the first foam molded part and a cross section in a thickness direction of the foaming site of the second foam molded part are observed, an angle $\varphi$ formed by a direction orthogonal to the thickness direction of the foaming site of the first form molded part and a direction orthogonal to the thickness direction of the foaming site of the second form molded part shows a relationship of 60° to 90°.

# FIG.1

FIG.2

# FIG.3

FIG.4

FIG.5

FIG.6

## INTERNATIONAL SEARCH REPORT

| International application No. |
| --- |
| **PCT/JP2023/035807** |

### A. CLASSIFICATION OF SUBJECT MATTER

*B29C 44/00*(2006.01)i; *B29C 45/00*(2006.01)i; *B29C 45/56*(2006.01)i; *B60J 5/10*(2006.01)i
FI:   B29C44/00 D; B29C45/00; B29C45/56; B60J5/10 R

According to International Patent Classification (IPC) or to both national classification and IPC

### B. FIELDS SEARCHED

Minimum documentation searched (classification system followed by classification symbols)

B29C44/00-44/60; B29C45/00-45/24; B29C45/46-45/63; B29C45/70-45/72; B29C45/74-45/84; B29C67/20; B32B1/00-43/00; C08J9/00-9/42; B60J5/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2008/096860 A1 (TS TECH CO., LTD.) 14 August 2008 (2008-08-14) claims 1, 3, 5, paragraphs [0039]-[0042], [0052]-[0060], fig. 6 | 1-2 |
| A | | 3-6 |
| X | JP 2006-056265 A (MITSUI CHEMICALS, INC.) 02 March 2006 (2006-03-02) claim 1, paragraphs [0030]-[0033], [0036], [0101] | 1-2 |
| A | | 3-6 |
| X | JP 2022-530266 A (HUVIS CORP.) 28 June 2022 (2022-06-28) claim 1, paragraph [0065] | 1 |
| A | | 2-6 |
| A | JP 2010-111328 A (KANTO AUTO WORKS, LTD.) 20 May 2010 (2010-05-20) claims, fig. 1-5 | 1-6 |
| A | JP 08-072098 A (TAISEI PLUS KK) 19 March 1996 (1996-03-19) claims, paragraphs [0013]-[0014] | 1-6 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 December 2023** | **26 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/035807** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2015-151119 A (DAIHATSU MOTOR CO., LTD.) 24 August 2015 (2015-08-24)<br>claims, paragraph [0025] | 1-6 |
| A | JP 51-030259 A (KURARE PURASUCHITSUKU KK) 15 March 1976 (1976-03-15)<br>claims, example 2 | 1-6 |
| A | 小川淳一 他, 発泡成形技術を用いたドアモジュール基材の開発, マツダ技報, no.<br>27(2009), 2009, pages 21-25, <URL: https://www.mazda.com/ja/innovation/technology/<br>gihou/2009/>, (OGAWA, Junichi et al. Development of Door Module Carrier Using Foam<br>Molding Technology. Mazda Technical Review.)<br>pages 22-24, 3. 射出発泡成形技術の開発, non-official translation (3. Development of<br>injection foam molding technology) | 1-6 |

Form PCT/ISA/210 (second sheet) (January 2015)

INTERNATIONAL SEARCH REPORT
Information on patent family members

International application No.

**PCT/JP2023/035807**

| Patent document cited in search report | | | Publication date (day/month/year) | Patent family member(s) | | | Publication date (day/month/year) |
|---|---|---|---|---|---|---|---|
| WO | 2008/096860 | A1 | 14 August 2008 | US 2011/0008565 A1 claims 1, 3, 5, paragraphs [0073]-[0078], [0086]-[0097], fig. 6 | | | |
| JP | 2006-056265 | A | 02 March 2006 | US 2002/0017734 A1 claims, paragraphs [0045]-[0046] | | | |
| JP | 2022-530266 | A | 28 June 2022 | WO 2020/222550 A1 | | | |
| JP | 2010-111328 | A | 20 May 2010 | (Family: none) | | | |
| JP | 08-072098 | A | 19 March 1996 | (Family: none) | | | |
| JP | 2015-151119 | A | 24 August 2015 | (Family: none) | | | |
| JP | 51-030259 | A | 15 March 1976 | (Family: none) | | | |

Form PCT/ISA/210 (patent family annex) (January 2015)

**REFERENCES CITED IN THE DESCRIPTION**

**Patent documents cited in the description**

- JP 2005238726 A

- JP 2022157105 A